# EUROPÄISCHE PATENTSCHRIFT

(11) **EP 2 867 079 B1**
(45) Veröffentlichungstag und Bekanntmachung des Hinweises auf die Patenterteilung: **29.03.2017**
(21) Anmeldenummer: 13717716.8
(22) Anmeldetag: 12.04.2013
(51) Int. Cl.: B60T 17/00, F15B 21/04

(54) **DRUCKLUFTAUFBEREITUNGSEINRICHTUNG FÜR EIN FAHRZEUG UND VERFAHREN ZUM BETREIBEN EINER DRUCKLUFTAUFBEREITUNGSEINRICHTUNG**
COMPRESSED-AIR PROCESSING DEVICE FOR A VEHICLE AND METHOD FOR OPERATING A COMPRESSED-AIR PROCESSING DEVICE
DISPOSITIF DE CONDITIONNEMENT D'AIR COMPRIMÉ POUR VÉHICULE ET PROCÉDÉ POUR FAIRE FONCTIONNER UN DISPOSITIF DE CONDITIONNEMENT D'AIR COMPRIMÉ

(30) Priorität: 13.04.2012 DE 102012007470
(43) Veröffentlichungstag der Anmeldung: 06.05.2015
(73) Patentinhaber: KNORR-BREMSE Systeme für Nutzfahrzeuge GmbH, 80809 München (DE)
(72) Erfinder: SCHNITTGER, Karsten, 80935 München (DE)
(86) Internationale Anmeldenummer: PCT/EP2013/001083
(87) Internationale Veröffentlichungsnummer: WO 2013/152867

(56) Entgegenhaltungen:
- EP-A1- 1 479 584
- DE-A1-102007 009 767
- US-A1- 2007 246 998

## Beschreibung

Die Erfindung betrifft eine Druckluftaufbereitungseinrichtung für ein Fahrzeug, umfassend ein Magnetventil, wobei ein Magnetventilausgangsanschluss des Magnetventils mit einem Kompressorsteuerausgang gekoppelt ist, ein Regenerationsmagnetventil, das mit dem Magnetventilausgangsanschluss gekoppelt ist, und ein Ablassventil.

Die vorliegende Erfindung betrifft weiterhin ein Verfahren zum Betreiben einer Druckluftaufbereitungseinrichtung für ein Fahrzeug, umfassend ein Magnetventil, das einen Kompressorsteuerausgang ansteuert, ein Regenerationsmagnetventil, das über das Magnetventil mit Druckluft nachversorgt wird, und ein Ablássventil.

Eine Druckluftaufbereitungseinrichtung ist eine Einrichtung eines Fahrzeugs, die von einem Kompressor geförderte Druckluft aufbereitet, das heißt beispielsweise von Schmutz-, Ölpartikeln und/oder Feuchtigkeit befreit. Die Druckluftaufbereitung erfolgt innerhalb einer Luftfilterpatrone, die in zyklischen Abständen eine Regenerationsphase durchlaufen muss, um eine ausreichende Qualität der aufbereiteten Druckluft sicherzustellen. Während der Regenerationsphase kann bereits aufbereitete Druckluft unter Umkehrung einer während einer Förderphase herrschenden Strömungsrichtung durch die Luftfilterpatrone rückströmen, um in der Luftfilterpatrone abgeschiedene Schmutz-, Ölpartikel und/oder Feuchtigkeit aufzunehmen und über ein geöffnetes Ablassventil aus dem System auszutragen. Während der Regenerationsphase kann ein mit der Druckluftaufbereitungseinrichtung gekoppelter Kompressor in eine energiesparende Betriebsweise geschaltet sein, um eine Leistungsaufnahme des Kompressors zu begrenzen.

Das Dokument DE 10 2007 009 767 A1 offenbart eine Druckluftversorgungseinrichtung für ein Nutzfahrzeug und ein Verfahren zum Betreiben einer Druckluftversorgungseinrichtung.

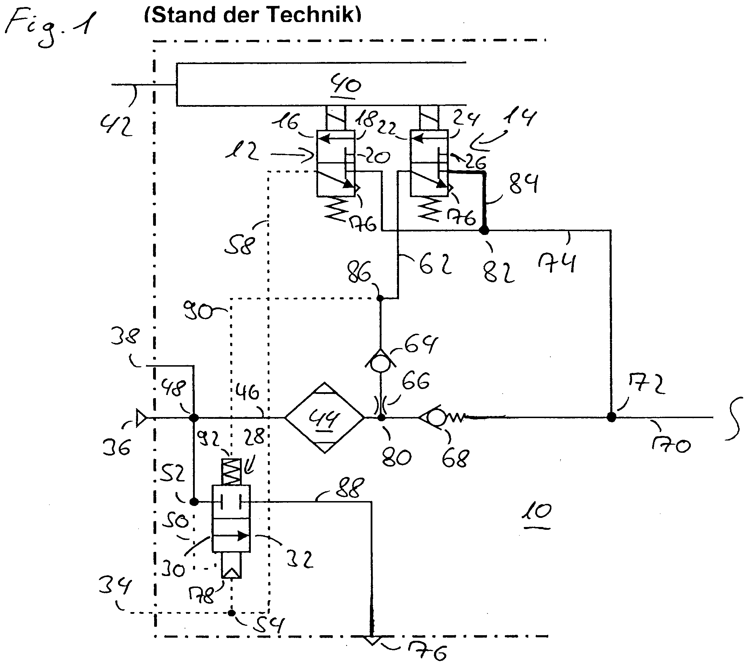

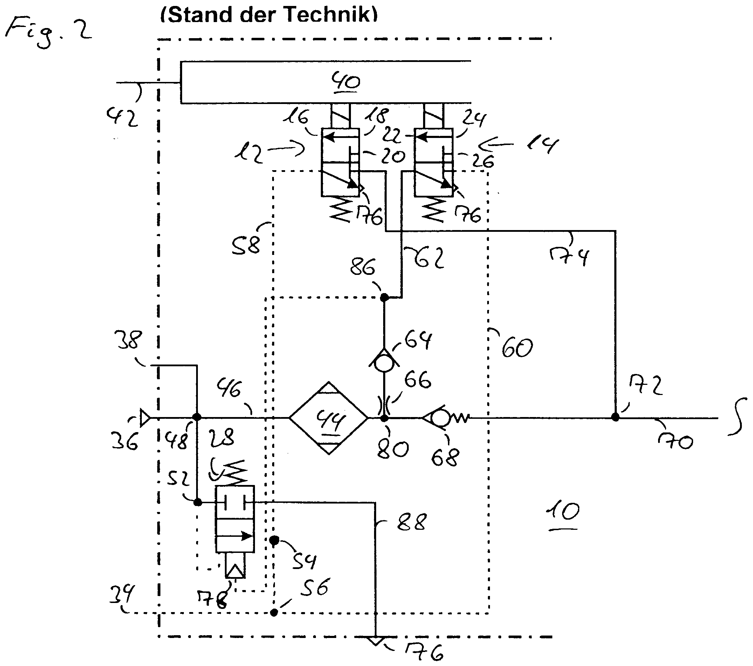

Entsprechende Druckluftaufbereitungseinrichtungen sind im Zusammenhang mit den Figuren 1 und 2 beschrieben. Die in Zusammenhang mit Figur 1 beschriebene Druckluftaufbereitungseinrichtung ist insbesondere robust gegen ein Einfrieren bei niedrigen Umgebungstemperaturen während die im Zusammenhang mit Figur 2 beschriebene Druckluftaufbereitungseinrichtung besonders energieeffizient zu betreiben ist.

Hiervon ausgehend liegt der vorliegenden Erfindung die Aufgabe zugrunde, bei der aus Figur 2 bekannten Druckluftaufbereitungseinrichtung den Schutz gegen das Einfrieren bei niedrigen Temperaturen zu erhöhen.
Diese Aufgabe wird durch die Merkmale der unabhängigen Ansprüche gelöst. Vorteilhafte Ausgestaltungen und Weiterbildungen der Erfindung ergeben sich aus den abhängigen Ansprüchen.
Die gattungsgemäße Druckluftaufbereitungseinrichtung wird durch die vorliegende Erfindung dadurch weiterentwickelt, dass der Magnetventilausgangsanschluss mit einem Drucksteuereingang des Ablassventils gekoppelt ist. Durch das Koppeln des Drucksteuereingangs des Ablassventils mit dem Magnetventilausgangsanschluss des Magnetventils wird bei einer Druckbeaufschlagung des Kompressorsteuerausgangs auch das Ablassventil mit einem druckbasierten Schaltsignal beaufschlagt. Das Umschalten eines mit dem Kompressorsteuerausgang gekoppelten Kompressors in eine energiesparende Betriebsweise führt daher gleichzeitig zu einem Öffnen des Ablassventils. Das geöffnete Ablassventil erlaubt das Austreten von Feuchtigkeit aus der Druckluftaufbereitungseinrichtung, so dass das Einfrieren bei niedrigen Temperaturen aufgrund von zurückgehaltener Feuchtigkeit verhindert wird.

Vorteilhafterweise kann vorgesehen sein, dass das Ablassventil an einer Förderleitung zwischen einem Drucklufteingang und einer Luftfilterpatrone angeordnet ist. Insbesondere in der Förderleitung kann sich während einer Förderphase der Druckluftaufbereitungseinrichtung Feuchtigkeit ansammeln, die beispielsweise in der Förderleitung kondensieren kann, wenn der mit der Druckluftaufbereitungseinrichtung gekoppelte Kompressor in eine energiesparende Betriebsweise überführt wird, ohne dass gleichzeitig eine Regerationsphase eingeleitet wird. Die Anordnung des Ablassventils an der Förderleitung zwischen dem Drucklufteingang und der Luftfilterpatrone kann daher die Ansammlung kondensierter Feuchtigkeit in der Druckluftaufbereitungseinrichtung verhindern.

Es kann vorgesehen sein, dass das Ablassventil über eine Steuerleitung von der Förderleitung mit Druckluft beaufschlagbar ist. Auf diese Weise kann sich das Ablassventil bei einem unzulässigen Druckanstieg in der Förderleitung automatisch öffnen und die Funktion eines Sicherheitsventils übernehmen, welches beispielsweise einen maximalen Förderdruck in der Förderleitung festlegt.

Weiterhin kann vorgesehen sein, dass die Druckluftaufbereitungseinrichtung ein elektronisches Steuergerät umfasst. Das elektronische Steuergerät kann insbesondere eine Ansteuerung des Magnetventils und des Regenerationsmagnetventils der Druckluftaufbereitungseinrichtung intern realisieren.

Nützlicherweise kann vorgesehen sein, dass ein erster Magnetventileingangsanschluss des Magnetventils mit einem Druckluftreservoir gekoppelt ist. Durch die Kopplung des ersten Magnetventileingangsanschlusses mit dem Druckluftreservoir kann auf einfache Weise das zur Erzeugung der pneumatischen Steuersignale notwendige Druckluftvolumen bereitgestellt werden. Weiterhin kann auf diese Weise ein Regenerationsluftvolumen zu dem von dem Magnetventil nachversorgten Regenerationsmagnetventil geführt werden. Das Druckluftreservoir kann beispielsweise über eine zentrale Versorgungsleitung mit dem ersten Magnetventileingangsanschluss gekoppelt sein. Das Druckluftreservoir kann beispielsweise ein Druckluftbehälter eines mit der Druckluftaufbereitungseinrichtung gekoppelten Verbraucherkreises oder ein in die Druckluftaufbereitungseinrichtung integrierter Druckluftbehälter sein.

Das gattungsgemäße Verfahren wird erfindungsgemäß dadurch weiterentwickelt, dass das Magnetventil das Ablassventil ansteuert. Auf diese Weise werden die Vorteile und Besonderheiten der erfindungsgemäßen Druckluftaufbereitungseinrichtung auch im Rahmen eines Verfahrens umgesetzt.

Die Erfindung wird nun mit Bezug auf die begleitenden Zeichnungen anhand bevorzugter Ausführungsformen beispielhaft erläutert.

Es zeigen:
- Figur 1: eine erste Ausführungsform einer Druckluftaufbereitungseinrichtung;
- Figur 2: eine zweite Ausführungsform einer Druckluftaufbereitungseinrichtung;
- Figur 3: eine dritte Ausführungsform einer Druckluftaufbereitungseinrichtung;
- Figur 4: einen Querschnitt durch ein Gehäuse einer Druckluftaufbereitungseinrichtung;
- Figur 5: einen weiteren Querschnitt durch ein Gehäuse einer Druckluftaufbereitungseinrichtung; und
- Figur 6: eine Detailansicht eines Gehäuses einer Druckluftaufbereitungseinrichtung.

In den folgenden Zeichnungen bezeichnen gleiche Bezugszeichen gleich oder gleichartige Teile.

Figur 1 zeigt eine erste Ausführungsform einer Druckluftaufbereitungseinrichtung 10. Die Druckluftaufbereitungseinrichtung 10 kann ein Magnetventil 12, ein Regenerationsmagnetventil 14 und ein Ablassventil 28 umfassen. Das Magnetventil 12 und das Regenerationsmagnetventil 14 können beispielsweise von einem elektronischen Steuergerät 40 elektrisch ansteuerbar sein. Das Steuergerät 40 kann beispielsweise über einen Bus-Anschluss 42 an weitere Komponenten eines Fahrzeugs, insbesondere eines Nutzfahrzeugs, gekoppelt sein. Die weiteren Komponenten können beispielsweise Sensoren und/oder einen Fahrzeugführungsrechner umfassen. Das Ablassventil 28 kann beispielsweise pneumatisch ansteuerbar sein. Die Druckluftaufbereitungseinrichtung 10 kann weiterhin eine Luftfilterpatrone 44 und/oder ein erstes Rückschlagventil 64 und/oder eine Drossel 66 und/oder ein zweites Rückschlagventil 68 umfassen. Die Druckluftaufbereitungseinrichtung 10 kann einen Kompressorsteuerausgang 34 und/oder einen Kompressoranschluss 36 und/oder einen Fremdbefüllungsanschluss 38 umfassen. Der Kompressoranschluss 36 kann mit einem in Figur 1 nicht dargestellten Kompressor gekoppelt sein, der während einer Förderphase der Druckluftaufbereitungseinrichtung 10 komprimierte Druckluft zuführt. Während der Förderphase strömt die Druckluft ausgehend von dem Kompressoranschluss 36 durch eine Förderleitung 46 zu der Luftfilterpatrone 44, in der die Druckluft aufbereitet werden kann. Während der Aufbereitung kann die zugeführte Druckluft von Schmutz- und/oder Ölpartikeln und/oder Feuchtigkeit befreit werden. Ein erster Leitungspunkt 48 kann in der Förderleitung 46 zwischen dem Kompressoranschluss 36 und der Luftfilterpatrone 44 vorgesehen sein. Beispielsweise kann der Fremdbefüllungsanschluss 38 an dem ersten Leitungspunkt 48 in der Förderleitung 46 münden. Ausgehend von dem ersten Leitungspunkt 48 kann die Förderleitung 46 über eine Entlüftungsleitung 88 mit einer Entlüftung 76 gekoppelt sein. Sämtliche in Figur 1 dargestellten Entlüftungen sind mit dem Bezugszeichen 76 gekennzeichnet und können getrennte Entlüftungen/Entlüftungsöffnungen und/oder eine gemeinsame Entlüftung/Entlüftungsöffnung kennzeichnen. In der Entlüftungsleitung 88 kann das Ablassventil 28 angeordnet sein. Das Ablassventil 28 kann beispielsweise als pneumatisch ansteuerbares 2/2-Wegeventil ausgeführt sein. Das Ablassventil 28 kann einen ersten Ablassventilanschluss 30 und einen zweiten Ablassventilanschluss 32 umfassen, wobei der erste Ablassventilanschluss 30 beispielsweise auf der dem ersten Leitungspunkt 48 zugewandten Seite der Entlüftungsleitung 88 angeordnet sein kann, während der zweite Ablassventilanschluss 32 auf der der Entlüftung 76 zugewandten Seite der Entlüftungsleitung 88 angeordnet sein kann. Das Ablassventil 28 kann, wie in Figur 1 angedeutet, ein elastisches Element, zum Beispiel eine Feder, umfassen, durch die das Ablassventil 28 in der in Figur 1 dargestellten Schaltposition gehalten wird, wenn keine Steuerdrücke an dem Ablassventil 28 anliegen. Ausgehend von einem zweiten Leitungspunkt 52 kann eine Steuerleitung 50 von der Entlüftungsleitung 88 abzweigen. Die Steuerleitung 50 kann mit dem Ablassventil 28 gekoppelt sein, um eine pneumatische Ansteuerung des Ablassventils 28 zu ermöglichen. Auf diese Weise kann ein in der Förderleitung 46 anstehender Förderdruck begrenzt werden, da bei Überschreiten eines zulässigen Maximaldrucks das Ablassventil 28 aufgrund der pneumatischen Ansteuerung über die Steuerleitung 50 in seinen in Figur 1 nicht dargestellten Schaltzustand überführt wird, so dass das in der Förderleitung 46 anstehende Druckniveau über die Entlüftung 76 reduziert werden kann. Der Fremdbefüllungsanschluss 38 kann wie der Kompressoreingang 36 der Zuführung von Druckluft zu der Druckluftaufbereitungseinrichtung 10 dienen. Der Fremdbefüllungsanschluss 38 kann beispielsweise im Rahmen eines Servicebetriebs in Werkstätten genutzt werden.

Die in der Luftfilterpatrone 44 aufbereitete Druckluft kann beispielsweise über das zweite Rückschlagventil 68 in eine zentrale Versorgungsleitung 70 einströmen. Die zentrale Versorgungsleitung 70 kann beispielsweise zu weiteren in der Figur 1 nicht dargestellten Teilen der Druckluftaufbereitungseinrichtung 10 führen, welche für eine Speicherung und/oder Weiterleitung der aufbereiteten Druckluft zuständig sein können. Dies ist durch das verwendete Symbol "S" am rechten Rand der dargestellten zentralen Versorgungsleitung 70 angedeutet. Die nicht dargestellten Teile können beispielsweise ein Mehrkreisschutzventil und/oder einen Druckluftvorratsbehälter und/oder Verbraucherkreisanschlüsse und/oder Verbraucherkreise umfassen.

Das Magnetventil 12 kann beispielsweise ein 3/2-Wegeventil mit einem Magnetventilausgangsanschluss 16, einem ersten Magnetventileingangsanschluss 18 und einem zweiten Magnetventileingangsanschluss 20 sein. Der erste Magnetventileingangsanschluss 18 kann beispielsweise über eine Versorgungsleitung 74 an einem fünften Leitungspunkt 72 mit der zentralen Versorgungsleitung 70 gekoppelt sein. Der zweite Magnetventileingangsanschluss 20 kann beispielsweise mit der Entlüftung 76 gekoppelt sein. Der Magnetventilausgangsanschluss 16 kann beispielsweise über eine Kompressorsteuerleitung 58 mit dem Kompressorsteuerausgang 34 gekoppelt sein, wobei ein Drucksteuereingang 78 des Ablassventils 28 an einem dritten Leitungspunkt 54 auf der Kompressorsteuerleitung 58 ebenfalls mit dem Magnetventilausgangsanschluss 16 gekoppelt sein kann. Das Magnetventil 12 kann ein elastisches Element, zum Beispiel eine Feder, umfassen, das eine Ruheposition des Magnetventils 12 im unbestromten Zustand definieren kann. Die Ruheposition des Magnetventils 12 kann der in Figur 1 dargestellten Schaltposition entsprechen. Das Regenerationsmagnetventil 14 kann als einfaches 3/2-Wegeventil mit einem Regenerationsmagnetventilausgangsanschluss 22, einem ersten Regenerationsmagnetventileingangsanschluss 24 und einem zweiten Regenerationsmagnetventileingangsanschluss 26 ausgeführt sein. Der erste Regenerationsmagnetventileingangsanschluss 24 kann beispielsweise über eine weitere Versorgungsleitung 84 an einem siebten Leitungspunkt 82 mit der Versorgungsleitung 74 gekoppelt sein, so dass der erste Regenerationsmagnetventileingangsanschluss 24 letztlich beispielsweise mit der zentralen Versorgungsleitung 70 gekoppelt sein kann. Der zweite Regenerationsmagnetventileingangsanschluss 26 kann beispielsweise mit der Entlüftung 76 gekoppelt sein. Der Regenerationsmagnetventilausgangsanschluss 22 kann zu einer Regenerationsleitung 62 führen, die an einem sechsten Leitungspunkt 80 zwischen der Luftfilterpatrone 44 und dem zweiten Rückschlagventil 68 münden kann. In der Regenerationsleitung 62 können das erste Rückschlagventil 64 und die Drossel 66 angeordnet sein. Ausgehend von einem achten Leitungspunkt 86 kann Druckluft aus der Regenerationsleitung 62 über eine weitere Steuerleitung 90 zu einem Druckluftsteuereingang 92 strömen. Die an dem Druckluftsteuereingang 92 bereitgestellte Druckluft kann beispielsweise die von dem elastischen Element des Ablassventils 28 bereitgestellte Vorspannung verstärken. Das Regenerationsmagnetventil 14 kann ein elastisches Element umfassen, das beispielsweise als Feder ausgebildet sein kann. Das elastische Element des Regenerationsmagnetventils 14 kann eine Ruheposition definieren, die beispielsweise der in Figur 1 dargestellten Schaltposition des Regenerationsmagnetventils 14 entsprechen kann. Im Folgenden wird die Funktionsweise der in Figur 1 dargestellten Druckluftaufbereitungseinrichtung kurz erklärt.

Während einer Druckluftförderphase wird Druckluft ausgehend von dem Kompressoranschluss 36 über die Förderleitung 46 und die Luftfilterpatrone 44 in die zentrale Versorgungsleitung 70 gefördert, um von dort weiter auf nachgeordnete Komponenten verteilt zu werden. Wenn ausreichend Druckluft vorhanden ist, kann beispielsweise das elektronische Steuergerät 40 durch Überführen des Magnetventils 12 in seine nicht dargestellte Schaltposition die Förderung von Druckluft unterbrechen. Durch das Überführen des Magnetventils 12 in seine nicht dargestellte Schaltposition wird Druckluft aus der zentralen Versorgungsleitung 70 über die Versorgungsleitung 74 und die Kompressorsteuerleitung 58 gleichzeitig zu dem Kompressorsteuerausgang 34 und dem Drucksteuereingang 78 geführt. Durch die Beaufschlagung des Drucksteuereingangs 78 mit Druckluft kann das Ablassventil 28 in seine nicht dargestellte Schaltposition überführt werden, so dass die Förderleitung 46 mit der Entlüftung 76 gekoppelt ist. In der Förderleitung 46 anstehende Druckluft kann dann ungehindert über die Entlüftung 76 aus der Druckluftaufbereitungseinrichtung 10 entweichen. Die Beaufschlagung des Kompressorsteuerausgangs 36 mit Druckluft kann den mit der Druckluftaufbereitungseinrichtung 10 gekoppelten Kompressor in eine energiesparende Betriebsweise überführen, so dass die an dem Kompressoranschluss 36 bereitgestellte Druckluftmenge/-volumen stark reduziert ist. In einer energiesparenden Betriebsweise kann der von dem Kompressor bereitgestellte Volumenstrom, der beispielsweise die bereitgestellte Druckluftmenge und/oder das bereitgestellte Druckluftvolumen bestimmen kann, beispielsweise auf etwa 20 % des maximal bereitgestellten Volumenstroms reduziert sein. Die an dem Kompressoranschluss 36 in die Druckluftaufbereitungseinrichtung 10 einströmende Druckluft kann direkt über die Entlüftungsleitung 88 und die Entlüftung 76 wieder aus der Druckluftaufbereitungseinrichtung 10 entweichen, so dass ein Einfrieren der Druckluftaufbereitungseinrichtung 10 aufgrund von in der Förderleitung 46 kondensiertem Wasser sicher verhindert werden kann. Eventuell bereits abgeschiedenes Wasser, beispielsweise in der Förderleitung abgeschiedenes Wasser, kann zuverlässig durch den reduzierten Volumenstrom aus der Druckluftaufbereitungseinrichtung 10 ausgeblasen werden.

Wenn das Regenerationsmagnetventil 14 von dem elektronischen Steuergerät 40 in seine in Figur 1 nicht dargestellte Schaltposition überführt wird, kann die Regenerationsleitung 62 über die weitere Versorgungsleitung 84 und die Versorgungsleitung 74 mit der zentralen Versorgungsleitung 70 gekoppelt werden. Auf diese Weise kann der Druckluftsteuereingang 92 eine erhöhte Vorspannung an dem elastischen Element des Ablassventils 28 erzeugen, beispielsweise um einen erhöhten Förderdruck in der Förderleitung 46 zuzulassen. Das Ablassventil 28 ist jedoch geschlossen, solange das Magnetventil 12 nicht gleichzeitig in seine in Figur 1 nicht dargestellte Schaltposition überführt ist. Wenn zusätzlich zu dem Regenerationsmagnetventil 14 auch das Magnetventil 12 in seine in Figur 1 nicht dargestellte Schaltposition überführt ist, öffnet das Ablassventil 28 die Verbindung zwischen der Förderleitung 46 und der Entlüftung 76, schaltet den mit der Druckluftaufbereitungseinrichtung 10 gekoppelten Kompressor in eine energiesparende Betriebsweise und leitet eine Regenerationsphase der Luftfilterpatrone 44 ein. Während der Regenerationsphase der Luftfilterpatrone 44 kann bereits aufbereitete Druckluft aus der zentralen Versorgungsleitung 70 über die Versorgungsleitung 74, die weitere Versorgungsleitung 84 und die Regenerationsleitung 62 unter Umgehung des zweiten Rückschlagventils 68 zu der Luftfilterpatrone 44 zurückströmen. Die Regenerationsleitung 62 kann an dem sechsten Leitungspunkt 80 zwischen dem zweiten Rückschlagventil 68 und der Luftfilterpatrone 44 münden. Die in der Regenerationsleitung 62 angeordnete Drossel 66 kann die Rückströmungsgeschwindigkeit der Regenerationsluft begrenzen, um die Luftfilterpatrone 44 vor Beschädigungen zu schützen. Während der Regenerationsphase kann die rückströmende Druckluft Schmutz- und/oder Ölpartikel und/oder Feuchtigkeit aufnehmen, die während der vorangegangenen Förderphase in der Luftfilterpatrone 44 abgelagert worden sind. Die Regenerationsluft, die die Schmutz- und/oder Ölpartikel und/oder Feuchtigkeit aus der Luftfilterpatrone 44 aufnimmt, kann über die Förderleitung 46 und die Entlüftungsleitung 88 an der Entlüftung 76 aus der Druckluftaufbereitungseinrichtung 10 entweichen.

Figur 2 zeigt eine zweite Ausführungsform einer Druckluftaufbereitungseinrichtung. Im Gegensatz zu der aus Figur 1 bekannten ersten Ausführungsform kann das Regenerationsmagnetventil 14 von dem Magnetventil 12 nachversorgt sein. Zu diesem Zweck kann der erste Regenerationsmagnetventileingangsanschluss 24 über eine Regenerationsversorgungsleitung 60, die an einem vierten Leitungspunkt 56 in die Kompressorsteuerleitung 58 münden kann, mit dem Magnetventilausgangsanschluss 16 des Magnetventils 12 gekoppelt sein. Weiterhin kann der Drucksteuereingang 78 des Ablassventils 28 an dem achten Leitungspunkt 86 mit der Regenerationsleitung 62 gekoppelt sein. Die Funktionsweise der zweiten Ausführungsform wird im Folgenden beispielhaft erklärt.

Während einer Druckluftförderphase können sich das Magnetventil 12, das Regenerationsmagnetventil 14 und das Ablassventil 28 in ihren in Figur 1 dargestellten Schaltpositionen befinden. Wenn ausreichend Druckluft in der Druckluftaufbereitungseinrichtung 10 beziehungsweise nachgeordneten Komponenten vorhanden ist, kann die Druckluftaufbereitungseinrichtung 10 die Förderung von Druckluft unterbrechen. Zu diesem Zweck kann beispielsweise das elektronische Steuergerät 40 das Magnetventil 12 in seine in Figur 2 nicht dargestellte Schaltposition überführen, so dass die Kompressorsteuerleitung 58 über die Versorgungsleitung 74 beispielsweise mit der zentralen Versorgungsleitung 70 gekoppelt ist. Aufgrund dieser Verbindung kann an dem Kompressorsteuerausgang 34 beispielsweise ein pneumatisches Steuersignal in Form eines anstehenden Druckes ausgegeben werden, durch den ein mit der Druckluftaufbereitungseinrichtung gekoppelter Kompressor in eine energiesparende Betriebsweise überführt werden kann. Weiterhin kann die Regenerationsversorgungsleitung 60, die an dem vierten Leitungspunkt 56 von der Kompressorsteuerleitung 58 abzweigt und die zu dem ersten Regenerationsmagnetventileingangsanschluss 24 führt, mit Druck beaufschlagt werden. Solange das Regenerationsmagnetventil 14 in der in Figur 2 dargestellten Schaltposition verbleibt, kann auch das Ablassventil 28 in der in Figur 2 dargestellten Schaltposition bleiben, da der Drucksteuereingang 78 nicht mit einem Schaltdruck beaufschlagt ist. Die Förderleitung 46 kann bei der in Figur 2 dargestellten Ausführungsform nicht automatisch druckentlastet werden, wenn die Druckluftförderung unterbrochen wird. Auf diese Weise kann die Förderung und Aufbereitung von Druckluft besonders effizient gestaltet werden. Wenn die in der Förderleitung 46 unter Druck stehende nicht aufbereitete Druckluft abkühlt, kann jedoch in der Luft vorhandene Feuchtigkeit kondensieren, die bei niedrigen Temperaturen zum Einfrieren der Förderleitung 46 führen kann.

Wenn zusätzlich zu dem Magnetventil 12 auch das Regenerationsmagnetventil 14 in die nicht dargestellte Schaltposition überführt wird, kann eine Regenerationsphase eingeleitet werden, bei der Druckluft über die Regenerationsleitung 62 unter Umgehung des zweiten Rückschlagventils 68 durch die Luftfilterpatrone 44 rückströmt und über die Förderleitung 46, das nun geöffnete Ablassventil 28 und die Entlüftungsleitung 88 an der Entlüftung 76 aus der Druckluftaufbereitungseinrichtung 10 entweicht.

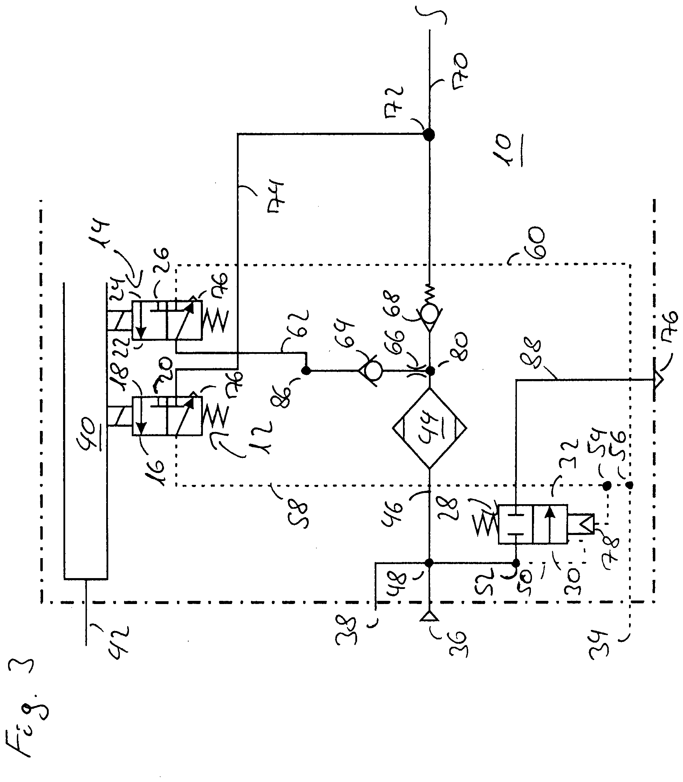

Figur 3 zeigt eine dritte Ausführungsform einer Druckluftaufbereitungseinrichtung. Die Druckluftaufbereitungseinrichtung 10 kann ein Magnetventil 12, ein Regenerationsmagnetventil 14 und ein Ablassventil 28 umfassen. Das Magnetventil 12 und das Regenerationsmagnetventil 14 können beispielsweise von einem elektronischen Steuergerät 40 elektrisch ansteuerbar sein. Das Steuergerät 40 kann beispielsweise über einen Bus-Anschluss 42 an weitere Komponenten eines Fahrzeugs, insbesondere eines Nutzfahrzeugs, gekoppelt sein. Die weiteren Komponenten können beispielsweise Sensoren, insbesondere Temperatur- und Drucksensoren, und/oder einen Fahrzeugführungsrechner umfassen. Das Ablassventil 28 kann beispielsweise pneumatisch ansteuerbar sein. Die Druckluftaufbereitungseinrichtung 10 kann weiterhin eine Lüftfilterpatrone 44 und/oder ein erstes Rückschlagventil 64 und/oder eine Drossel 66 und/oder ein zweites Rückschlagventil 68 umfassen. Das erste Rückschlagventil 64 und/oder das zweite Rückschlagventil 68 können ein elastisches Element, zum Beispiel eine Feder, umfassen, um beispielsweise im Drucklosen Zustand eine definierte Position zu erzwingen und/oder minimale Öffnungsdrücke vorzugeben. Die Druckluftaufbereitungseinrichtung 10 kann einen Kompressorsteuerausgang 34 und/oder einen Kompressoranschluss 36 und/oder einen Fremdbefüllungsanschluss 38 umfassen. Der Kompressoranschluss 36 kann mit einem in Figur 3 nicht dargestellten Kompressor gekoppelt sein, der während einer Förderphase der Druckluftaufbereitungseinrichtung 10 komprimierte Druckluft zuführt. Während der Förderphase strömt die Druckluft ausgehend von dem Kompressoranschluss 36 durch eine Förderleitung 46 zu der Luftfilterpatrone 44, in der die Druckluft aufbereitet werden kann. Während der Aufbereitung kann die zugeführte Druckluft von Schmutz- und/oder Ölpartikeln und/oder Feuchtigkeit befreit werden. Ein erster Leitungspunkt 48 kann in der Förderleitung 46 zwischen dem Kompressoranschluss 36 und der Luftfilterpatrone 44 vorgesehen sein. Beispielweise kann der Fremdbefüllungsanschluss 38 an dem ersten Leitungspunkt 48 in der Förderleitung 46 münden. Ausgehend von dem ersten Leitungspunkt 48 kann die Förderleitung 46 über eine Entlüftungsleitung 88 mit einer Entlüftung 76 gekoppelt sein. Eine hiervon abweichende Kopplung der Entlüftungsleitung 88 mit der Förderleitung 46 ist möglich. Sämtliche in Figur 3 dargestellten Entlüftungen sind mit dem Bezugszeichen 76 gekennzeichnet und können getrennte Entlüftungen/Entlüftungsöffnungen und/oder eine gemeinsame Entlüftung/Entlüftungsöffnung kennzeichnen. In der Entlüftungsleitung 88 kann das Ablassventil 28 angeordnet sein. Das Ablassventil 28 kann beispielsweise als pneumatisch ansteuerbares 2/2-Wegeventil ausgeführt sein. Das Ablassventil 28 kann einen ersten Ablassventilanschluss 30 und einen zweiten Ablassventilanschluss 32 umfassen, wobei der erste Ablassventilanschluss 30 beispielweise auf der dem ersten Leitungspunkt 48 zugewandten Seite der Entlüftungsleitung 88 angeordnet sein kann, während der zweite Ablassventilanschluss 32 auf der der Entlüftung 76 zugewandten Seite der Entlüftungsleitung 88 angeordnet sein kann. Das Ablassventil 28 kann, wie in Figur 3 angedeutet, ein elastisches Element, zum Beispiel eine Feder, umfassen, durch die das Ablassventil 28 in der in Figur 3 dargestellten Schaltposition gehalten wird, wenn keine Steuerdrücke an dem Ablassventil 28 anliegen. In dieser Ruheposition kann das Ablassventil 28 eine Sperrstellung einnehmen. In der nicht dargestellten Schaltposition kann das Ablassventil 28 geöffnet sein. Ausgehend von einem zweiten Leitungspunkt 52 kann eine Steuerleitung 50 von der Entlüftungsleitung 88 abzweigen. Die Steuerleitung 50 kann mit dem Ablassventil 28 gekoppelt sein, um eine pneumatische Ansteuerung des Ablassventils 28 zu ermöglichen. Auf diese Weise kann ein in der Förderleitung 46 anstehender Förderdruck begrenzt werden, da bei Überschreiten eines zulässigen Maximaldrucks das Ablassventil 28 aufgrund der pneumatischen Ansteuerung über die Steuerleitung 50 in seinen in Figur 3 nicht dargestellten geöffneten Schaltzustand überführt wird, so dass das in der Förderleitung 46 anstehende Druckniveau über die Entlüftung 76 reduziert werden kann. Die Steuerleitung 50 kann symbolhaft verstanden werden, wenn bewegliche Elemente innerhalb des Ablassventils 28, zum Beispiel ein Schalkolben, durch einen an dem ersten Ablassventilanschluss 30 anstehenden Druck direkt bewegbar sind. Der Fremdbefüllungsanschluss 38 kann wie der Kompressoreingang 36 der Zuführung von Druckluft zu der Druckluftaufbereitungseinrichtung 10 dienen. Der Fremdbefüllungsanschluss 38 kann beispielsweise im Rahmen eines Servicebetriebs in Werkstätten genutzt werden.

Die in der Luftfilterpatrone 44 aufbereitete Druckluft kann beispielsweise über das zweite Rückschlagventil 68 in eine zentrale Versorgungsleitung 70 einströmen. Die zentrale Versorgungsleitung 70 kann beispielsweise zu weiteren in der Figur 3 nicht dargestellten Teilen der Druckluftaufbereitungseinrichtung 10 führen, welche für eine Speicherung und/oder Weiterleitung der aufbereiteten Druckluft zuständig sein können. Das verwendete Symbol "S" deutet diese Forstsetzung der Druckluftaufbereitungseinrichtung 10 schematisch an. Die nicht dargestellten Teile können beispielsweise ein Mehrkreisschutzventil und/oder einen Druckluftvorratsbehälter und/oder Verbraucherkreisanschlüsse und/oder Verbraucherkreise umfassen. Die Verbraucherkreise können insbesondere Betriebsbremskreise und/oder ein Feststellbremskreis sein.

Das Magnetventil 12 kann beispielsweise ein 3/2-Wegeventil mit einem Magnetventilausgangsanschluss 16, einem ersten Magnetventileingangsanschluss 18 und einem zweiten Magnetventileingangsarischluss 20 sein. Der erste Magnetventileingangsanschluss 18 kann beispielsweise über eine Versorgungsleitung 74 an einem fünften Leitungspunkt 72 mit der zentralen Versorgungsleitung 70 gekoppelt sein. Der zweite Magnetventileingangsanschluss 20 kann beispielsweise mit der Entlüftung 76 gekoppelt sein. Der Magnetventilausgangsanschluss 16 kann beispielsweise über eine Kompressorsteuerleitung 58 mit dem Kompressorsteuerausgang 34 gekoppelt sein, wobei ein Drucksteuereingang 78 des Ablassventils 28 an einem dritten Leitungspunkt 54 auf der Kompressorsteuerleitung 58 ebenfalls mit dem Magnetventilausgangsanschluss 16 gekoppelt sein kann. Das Magnetventil 12 kann ein elastisches Element, zum Beispiel eine Feder, umfassen, das eine Ruheposition des Magnetventils 12 im unbestromten Zustand definieren kann. Die Ruheposition des Magnetventils 12 kann der in Figur 3 dargestellten Schaltposition entsprechen. In der Ruheposition kann das Magnetventil 12 beispielsweise den zweiten Magnetventileingangsanschluss 20 mit dem Magnetventilausgangsanschluss 16 verbinden und den ersten Magnetventileingangsanschluss 18 sperren. In der nicht dargestellten erregten, das heißt der bestromten, Schaltposition kann das Magnetventil 12 den ersten Magnetventileingangsanschluss 18 mit dem Magnetventilausgangsanschluss 16 verbinden und den zweiten Magnetventileingangsanschluss 20 sperren. Das Regenerationsmagnetventil 14 kann als einfaches 3/2-Wegeventil mit einem Regenerationsmagnetventilausgangsanschluss 22, einem ersten Regenerationsmagnetventileingangsanschluss 24 und einem zweiten Regenerationsmagnetventileingangsanschluss 26 ausgeführt sein. Das Regenerationsmagnetventil 14 kann ein elastisches Element, beispielsweise eine Feder, umfassen, um die in Figur 3 dargestellte Schaltposition des Regenerationsmagnetventils 14 als Ruheposition zu definieren. In der Ruheposition kann das Regenerationsmagnetventil 14 beispielsweise den zweiten Regenerationsmagnetventileingangsanschluss 26 mit dem Regenerationsmagnetventilausgangsanschluss 22 verbinden und den ersten Regenerationsmagnetventileingangsanschluss 24 sperren. In der erregten, das heißt der bestromten, Schaltposition kann das Regenerationsmagnetventil 14 beispielsweise den ersten Regenerationsmagnetventileingangsanschluss 24 mit dem Regenerationsmagnetventilausgangsanschluss 22 verbinden und den zweiten Regenerationsmagnetventileingangsanschluss 24 sperren.

Der erste Regenerationsmagnetventileingangsanschluss 24 kann beispielsweise über eine Regenerationsversorgungsleitung 60, die an einem vierten Leitungspunkt 56 in der Kompressorsteuerleitung 58 mündet, über das Magnetventil 12 nachversorgt werden. Der zweite Magnetventilsteuereingang 20 des Magnetventils 12 kann wiederum mit der Versorgungsleitung 74 gekoppelt sein, so dass der erste Regenerationsmagnetventileingangsanschluss 24 letztlich über das Magnetventil 12 mit der zentralen Versorgungsleitung 70 gekoppelt sein kann. Der zweite Regenerationsmagnetventileingangsanschluss 26 kann beispielsweise mit der Entlüftung 76 gekoppelt sein. Der Regenerationsmagnetventilausgangsanschluss 22 kann zu einer Regenerationsleitung 62 führen, die an einem sechsten Leitungspunkt 80 zwischen der Luftfilterpatrone 44 und dem zweiten Rückschlagventil 68 münden kann. In der Regenerationsleitung 62 können das erste Rückschlagventil 64 und die Drossel 66 angeordnet sein. Bei der in Figur 3 dargestellten Ausführungsform kann keine von der Regenerationsleitung 62 abzweigende Drucksteuerleitung vorgesehen sein. Die Funktionsweise der in Figur 3 dargestellten Druckluftaufbereitungseinrichtung wird im Folgenden beispielhaft erläutert.

Während einer Druckluftförderphase können das Magnetventil 12, das Regenerationsmagnetventil 14 und das Ablassventil 28 die in Figur 3 dargestellten jeweiligen Schaltpositionen einnehmen. Die Druckluft kann von dem Kompressoranschluss 36 über die Förderleitung 46, die Luftfilterpatrone 44 und das zweite Rückschlagventil 68 in die zentrale Versorgungsleitung 70 gefördert werden, um von dort zu weiteren nachgeordneten in Figur 3 nicht dargestellten Komponenten geführt zu werden. Mit zunehmender Befüllung kann der Druck in der Druckluftaufbereitungseinrichtung 10, insbesondere in der Förderleitung 46, ansteigen, wobei bei Überschreiten eines zulässigen Maximaldrucks das Ablassventil 28 über die Steuerleitung 50, die von der Entlüftungsleitung 88 abzweigt, die Verbindung zwischen der Förderleitung 46 und der Entlüftung 76 zur Begrenzung des Drucks freigeben kann.

Wenn ausreichend Druckluft vorhanden ist, kann beispielsweise das elektronische Steuergerät 40 das Magnetventil 12 in seine in Figur 1 nicht dargestellte Schaltposition überführen, um den Kompressorsteuerausgang 34 über die Kompressorsteuerleitung 58 mit einem Steuerdruck zu beaufschlagen, um den mit der Druckluftaufbereitungseinrichtung 10 gekoppelten Kompressor in eine energiesparende Betriebsweise zu überführen. In der energiesparenden Betriebsweise kann ein von dem angeschlossenen Kompressor bereitgestellter Volumenstrom oder bereitgestelltes Druckluftvolumen auf beispielsweise 20 % des während der Förderphase normalen Volumenstroms (oder Druckluftvolumens) reduziert werden. Gleichzeitig kann der erste Regenerationsmagnetventileingangsanschluss 24 über die Regenerationsversorgungsleitung 60, die an dem vierten Leitungspunkt 56 in der Kompressorsteuerleitung 58 mündet, mit Druck beaufschlagt werden. Weiterhin kann auch der Drucksteuereingang 78 des Ablassventils 28, der an dem dritten Leitungspunkt 54 mit der Kompressorsteuerleitung 58 gekoppelt ist, mit einem Steuerdruck beaufschlagt werden, so dass auch das Ablassventil 28 in seine in Figur 3 nicht dargestellte Schaltposition überführt wird, wenn das pneumatische Steuersignal an dem Kompressorsteuerausgang 34 bereitgestellt wird. Das Überführen des Kompressors in eine energiesparende Betriebsweise kann somit bei der in Figur 3 dargestellten Ausführungsform immer gleichzeitig mit einer Druckentlastung der Förderleitung 46 erfolgen, die durch das Öffnen des Ablassventils 28 über die Entlüftungsleitung 88 mit der Entlüftung 76 gekoppelt werden kann. In der Förderleitung 46 vorhandene nicht aufbereitete Druckluft kann bei der in Figur 3 dargestellten Ausführungsform über die Entlüftung 76 aus der Druckluftaufbereitungseinrichtung 10 entweichen, wenn die Druckluftförderung zur Energieeinsparung unterbrochen wird. Die Kondensation von Feuchtigkeit in der Druckluftaufbereitungseinrichtung 10, insbesondere in der Förderleitung 46, aus abkühlender nicht aufbereiteter Druckluft kann bei der in Figur 3 dargestellten Ausführungsform analog zu der aus Figur 1 bekannten Ausführungsform verhindert werden.

Wenn zusätzlich zu dem Magnetventil 12 auch das Regenerationsmagnetventil 14 in seine in Figur 3 nicht dargestellte Schaltposition überführt wird, wird eine Regenerationsphase durchgeführt. Während der Regenerationsphase strömt Druckluft unter Umgehung des zweiten Rückschlagventils 68 durch die Regenerationsleitung 62 rückwärts durch die Luftfilterpatrone 44, die Förderleitung 46 und die Entlüftungsleitung 88, um an der Entlüftung 76 zu entweichen und dabei Schmutz- und/oder Ölpartikel und/oder Feuchtigkeit, die in der Luftfilterpatrone 44 abgelagert waren, aus der Druckluftaufbereitungseinrichtung 10 auszutragen.

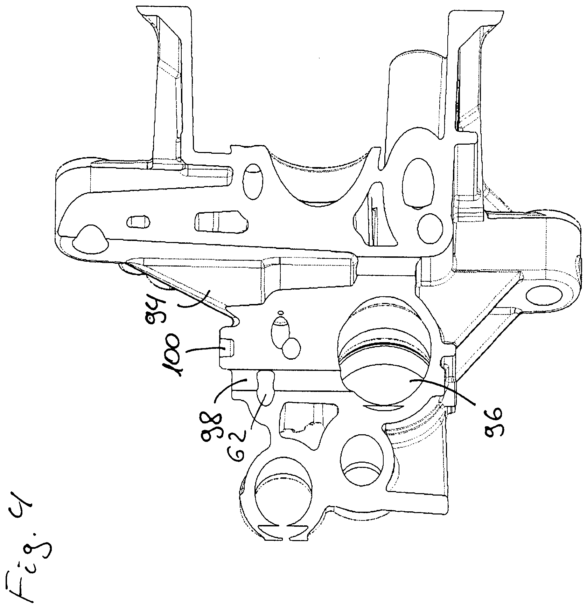

Die in den Figuren 2 und 3 dargestellten Ausführungsformen der Druckluftaufbereitungseinrichtung 10 können besonders leicht ineinander überführt werden. Zu diesem Zweck kann der Drucksteuereingang 78 des Ablassventils 28 statt mit dem an der Regenerationsleitung 62 angeordneten achten Leitungspunkt 86 mit dem an der Kompressorsteuerleitung 58 angeordneten dritten Leitungspunkt 54 gekoppelt werden. Je nach baulicher Ausgestaltung des das Magnetventil 12, das Regenrationsmagnetventil 14 und das Ablassventil 28 aufnehmenden Gehäuses kann hierfür beispielsweise bereits die Verlagerung einer einzigen Bohrung innerhalb des Gehäuses ausreichend sein, so dass erst sehr spät während der Fertigung der Druckluftaufbereitungseinrichtung 10 entschieden werden kann, ob die Druckluftaufbereitungseinrichtung 10 besonders resistent gegen Einfrieren oder besonders energieeffizient gestaltet sein soll. Dies wird im Zusammenhang mit den Figuren 4 bis 6 beispielhaft erläutert.

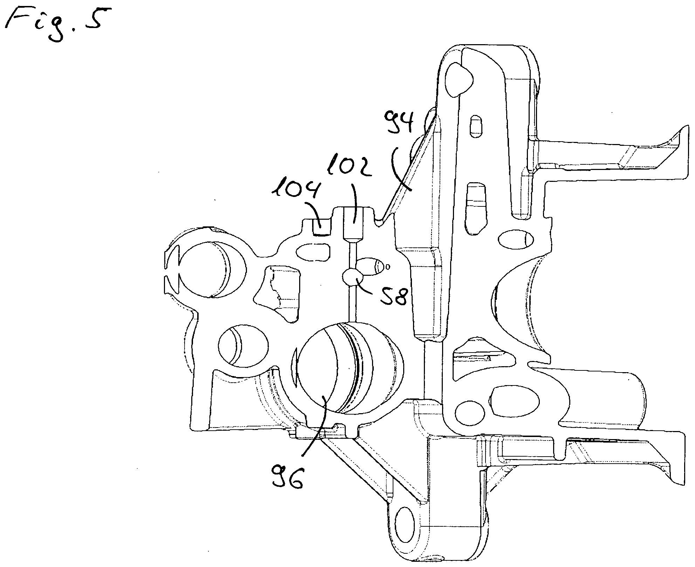

Figur 4 zeigt einen Querschnitt durch ein Gehäuse 94 einer Druckluftaufbereitungseinrichtung. Das aus den Figuren 2 und 3 bekannte Ablassventil 28 kann nach dem Zusammenbau in einer Aufnahmeöffnung 96 platziert sein. Eine erste Bohrung 98 kann so platziert sein, dass die Aufnahmeöffnung 96 mit der aus den Figuren 2 und 3 bekannten Regenerationsleitung 62 verbunden ist. Ein Schnittpunkt zwischen der ersten Bohrung 98 und der Regenerationsleitung 62 kann dem achten Leitungspunkt 86 entsprechen. Der Teil des Bohrkanals der ersten Bohrung 98 zwischen dem Schnittpunkt und der Aufnahmeöffnung 96 kann einer Steuerleitung zur Druckbeaufschlagung des Drucksteuereingangs 78 entsprechen. Nachdem die erste Bohrung 98 fertiggestellt ist, kann eine an einer Gehäuseoberfläche verbleibende unerwünschte Öffnung des Bohrkanals der ersten Bohrung 98 dicht verschlossen werden, zum Beispiel durch das Einpressen einer Metallkugel. Die erste Bohrung 96 kann an einem ersten Ansatz 104 an der Gehäuseoberfläche des Gehäuses 94 beginnen. Der erste Ansatz 104 kann beispielsweise in Figur 5 erkannt werden. Das in der Figur 4 dargestellte Gehäuse 94 kann beispielsweise für eine Druckluftaufbereitungseinrichtung 10 gemäß Figur 2 verwendet werden.

Figur 5 zeigt einen weiteren Querschnitt durch ein Gehäuse einer Druckluftaufbereitungseinrichtung. Analog zu der Darstellung aus Figur 4, kann das aus den Figuren 2 und 3 bekannte Ablassventil 28 nach dem Zusammenbau der Druckluftaufbereitungseinrichtung in der Aufnahmeöffnung 96 platziert sein. Eine zweite Bohrung 102 kann so platziert sein, dass die Aufnahmeöffnung 96 mit der aus den Figuren 2 und 3 bekannten Kompressorsteuerleitung 58 verbunden ist. Ein Schnittpunkt zwischen der zweiten Bohrung 102 und der Kompressorsteuerleitung 58 kann dem dritten Leitungspunkt 54 entsprechen. Der Teil des Bohrkanals der zweiten Bohrung 102 zwischen dem Schnittpunkt und der Aufnahmeöffnung 96 kann einer Steuerleitung zur Druckbeaufschlagung des Drucksteuereingangs 78 entsprechen. Nachdem die zweite Bohrung 102 fertiggestellt ist, kann eine an einer Gehäuseoberfläche verbleibende unerwünschte Öffnung des Bohrkanals der zweiten Bohrung 102 dicht verschlossen werden, zum Beispiel durch das Einpressen einer Metallkugel. Die zweite Bohrung 102 kann an einem zweiten Ansatz 100 an der Gehäuseoberfläche des Gehäuses 94 beginnen. Der zweite Ansatz 100 kann beispielsweise in Figur 4 erkannt werden. Das in der Figur 5 dargestellte Gehäuse 94 kann beispielsweise für eine Druckluftaufbereitungseinrichtung 10 gemäß Figur 3 verwendet werden.

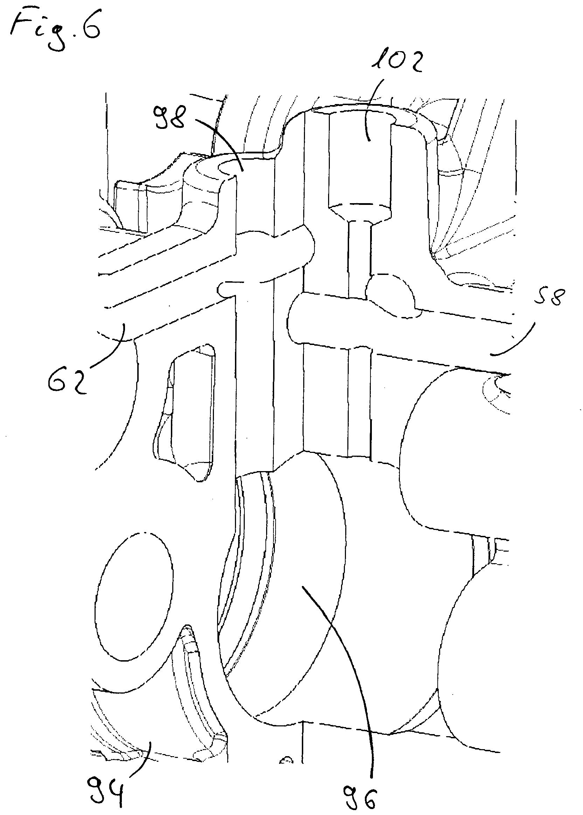

Figur 6 zeigt eine Detailansicht eines Gehäuses einer Druckluftaufbereitungseinrichtung. Figur 6 zeigt die erste Bohrung 98 zusammen mit der zweiten Bohrung 102, obwohl üblicherweise nur eine der beiden Bohrungen ausgeführt ist. Insbesondere sind in Figur 6 die beiden Schnittpunkte innerhalb des Gehäuses 94 zu erkennen.

Die Fertigung der Druckluftaufbereitungseinrichtung 10 gemäß Figur 2 und der Druckluftaufbereitungseinrichtung 10 gemäß Figur 3 kann mit identischen unbearbeiteten Ventilgehäusen erfolgen. Lediglich die Bearbeitung der anfänglich identischen Ventilgehäuse umfasst unterschiedliche Fertigungsschritte. Wenn eine Druckluftaufbereitungseinrichtung 10 gemäß Figur 2 hergestellt werden soll, kann die erste Bohrung 98 erzeugt werden und auf die zweite Bohrung 102 verzichtet werden. Wenn eine Druckluftaufbereitungseinrichtung 10 gemäß Figur 3 hergestellt werden soll, kann auf die erste Bohrung 98 verzichtet werden und stattdessen die zweite Bohrung 102 erzeugt werden.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Druckluftaufbereitungseinrichtung
- 12: Magnetventil
- 14: Regenerationsmagnetventil
- 16: Magnetventilausgangsanschluss
- 18: erster Magnetventileingangsanschluss
- 20: zweiter Magnetventileingangsanschluss
- 22: Regenerationsmagnetventilausgangsanschluss
- 24: erster Regenerationsmagnetventileingangsanschluss
- 26: zweiter Regenerationsmagnetventileingangsanschluss
- 28: Ablassventil
- 30: erster Ablassventilanschluss
- 32: zweiter Ablassventilanschluss
- 34: Kompressorsteuerausgang
- 36: Kompressoranschluss
- 38: Fremdbefüllungsanschluss
- 40: Steuergerät
- 42: Bus-Anschluss
- 44: Luftfilterpatrone
- 46: Förderleitung
- 48: erster Leitungspunkt
- 50: Steuerleitung
- 52: zweiter Leitungspunkt
- 54: dritter Leitungspunkt
- 56: vierter Leitungspunkt
- 58: Kompressorsteuerleitung
- 60: Regenerationsversorgungsleitung
- 62: Regenerationsleitung
- 64: erstes Rückschlagventil
- 66: Drossel
- 68: zweites Rückschlagventil
- 70: zentrale Versorgungsleitung
- 72: fünfter Leitungspunkt
- 74: Versorgungsleitung
- 76: Entlüftung
- 78: Drucksteuereingang
- 80: sechster Leitungspunkt
- 82: siebter Leitungspunkt
- 84: weitere Versorgungsleitung
- 86: achter Leitungspunkt
- 88: Entlüftungsleitung
- 90: weitere Steuerleitung
- 92: Druckluftsteuereingang
- 94: Gehäuse
- 96: Aufnahmeöffnung
- 98: erste Bohrung
- 100: zweiter Ansatz
- 102: zweite Bohrung
- 104: erster Ansatz

## Patentansprüche

1. Druckluftaufbereitungseinrichtung (10) für ein Fahrzeug, umfassend
- ein Magnetventil (12), wobei ein Magnetventilausgangsanschluss (16) des Magnetventils (12) mit einem Kompressorsteuerausgang (34) gekoppelt ist,
- ein Regenerationsmagnetventil (14), das mit dem Magnetventilausgangsanschluss (16) gekoppelt ist, und
- ein Ablassventil (28),
**dadurch gekennzeichnet, dass** der Magnetventilausgangsanschluss (16) mit einem Drucksteuereingang (78) des Ablassventils (28) gekoppelt ist.

2. Druckluftaufbereitungseinrichtung (10) nach Anspruch 1, **dadurch gekennzeichnet, dass** das Ablassventil (28) an einer Förderleitung (46) zwischen einem Drucklufteingang (36) und einer Luftfilterpatrone (44) angeordnet ist.

3. Druckluftaufbereitungseinrichtung (10) nach Anspruch 1 oder 2, **dadurch gekennzeichnet, dass** das Ablassventil (28) über eine Steuerleitung (50) von der Förderleitung (46) mit Druckluft beaufschlagbar ist.

4. Druckluftaufbereitungseinrichtung (10) nach einem der vorhergehenden Ansprüche, **dadurch gekennzeichnet, dass** die Druckluftaufbereitungseinrichtung (10) ein elektronisches Steuergerät (40) umfasst.

5. Druckluftaufbereitungseinrichtung (10) nach einem der vorhergehenden Ansprüche, **dadurch gekennzeichnet, dass** ein erster Magnetventileingangsanschluss (18) des Magnetventils (12) mit einem Druckluftreservoir gekoppelt ist.

6. Fahrzeug mit einer Druckluftaufbereitungseinrichtung gemäß einem der Ansprüche 1 bis 5.

7. Verfahren zum Betreiben einer Druckluftaufbereitungseinrichtung (10) für ein Fahrzeug, umfassend ein Magnetventil (12), das einen Kompressorsteuerausgang (34) ansteuert, ein Regenerationsmagnetventil (14), das über das Magnetventil (12) mit Druckluft nachversorgt wird, und ein Ablassventil (28), **dadurch gekennzeichnet, dass** das Magnetventil (12) das Ablassventil (28) ansteuert.

## Claims

1. Compressed-air processing device (10) for a vehicle, comprising
- a solenoid valve (12), wherein a solenoid valve output port (16) of the solenoid valve (12) is coupled to a compressor control output (34),
- a regeneration solenoid valve (14) which is coupled to the solenoid valve output port (16), and
- a discharge valve (28),
**characterized in that** the solenoid valve output port (16) is coupled to a pressure control input (78) of the discharge valve (28).

2. Compressed-air processing device (10) according to Claim 1, **characterized in that** the discharge valve (28) is arranged on a delivery line (46) between a compressed-air input (36) and an air filter cartridge (44).

3. Compressed-air processing device (10) according to Claim 1 or 2, **characterized in that** the discharge valve (28) can be pressurized with compressed air via a control line (50) from the delivery line (46).

4. Compressed-air processing device (10) according to any of the preceding claims, **characterized in that** the compressed-air processing device (10) comprises an electronic control unit (40).

5. Compressed-air processing device (10) according to any of the preceding claims, **characterized in that** a first solenoid valve input port (18) of the solenoid valve (12) is coupled to a compressed-air reservoir.

6. Vehicle with a compressed-air processing device according to any of Claims 1 to 5.

7. Method for operating a compressed-air processing device (10) for a vehicle, comprising a solenoid valve (12) which controls a compressor control output (34), a regeneration solenoid valve (14) which is supplied with compressed air via the solenoid valve (12), and a discharge valve (28), **characterized in that** the solenoid valve (12) controls the discharge valve (28).

## Revendications

1. Dispositif (10) de conditionnement d'air comprimé pour un véhicule, comprenant
- une électrovanne (12), un raccord (16) de sortie de l'électrovanne étant couplé à une sortie (34) de commande d'un compresseur,
- une électrovanne (14) de régénération, qui est couplée au raccord (16) de sortie de l'électrovanne et
- une vanne (28) de purge,
**caractérisé en ce que** le raccord (16) de sortie de l'électrovanne est couplé à une entrée (78) de commande de pression de la vanne (28) de purge.

2. Dispositif (10) de conditionnement d'air comprimé suivant la revendication 1, **caractérisé en ce que** la vanne (28) de purge est montée sur un conduit (46) de transport entre une entrée (36) d'air comprimé et une cartouche (44) de filtre d'air.

3. Dispositif (10) de conditionnement d'air comprimé suivant la revendication 1 ou 2, **caractérisé en ce que** la vanne (28) de purge peut être alimentée en air comprimé par le conduit (46) de transport par l'intermédiaire d'une ligne (50) de commande.

4. Dispositif (10) de conditionnement d'air comprimé suivant l'une des revendications précédentes, **caractérisé en ce que** le dispositif (10) de conditionnement d'air comprimé comprend un appareil (40) électronique de commande.

5. Dispositif (10) de conditionnement d'air comprimé suivant l'une des revendications précédentes, **caractérisé en ce qu'**un premier raccord (18) d'entrée de l'électrovanne (12) est couplé à un réservoir d'air comprimé.

6. Véhicule ayant un dispositif de conditionnement d'air comprimé suivant l'une des revendications 1 à 5.

7. Procédé pour faire fonctionner un dispositif (10) de conditionnement d'air comprimé pour un véhicule comprenant une électrovanne (12), qui commande une sortie (34) de commande de compresseur, une électrovanne (14) de régénération, qui est alimentée en air comprimé par l'électrovanne (12), et une vanne (28) de purge, **caractérisé en ce que** l'électrovanne (12) commande la vanne (28) de purge.
